# EUROPÄISCHE PATENTSCHRIFT

(11) **EP 1 321 210 B1**
(45) Veröffentlichungstag und Bekanntmachung des Hinweises auf die Patenterteilung: **30.08.2006**
(21) Anmeldenummer: 02025132.8
(22) Anmeldetag: 09.11.2002
(51) Int. Cl.: B23B 5/16, B23C 5/20

(54) **Werkzeug**
Chamfering tool
Outil de chanfreinage

(30) Priorität: 17.12.2001 DE 10163473
(43) Veröffentlichungstag der Anmeldung: 25.06.2003
(73) Patentinhaber: MAPAL Fabrik für Präzisionswerkzeuge Dr. Kress KG, D-73431 Aalen (DE)
(72) Erfinder:
(74) Vertreter: Gleiss, Alf-Olav

(56) Entgegenhaltungen:
- EP-A- 0 081 775
- EP-A- 0 922 518
- WO-A-92/20485
- DE-A- 10 026 461
- GB-A- 2 371 260
- US-A- 2 637 894
- US-A- 4 693 643
- US-A- 4 906 294

## Beschreibung

Die Erfindung betrifft ein Werkzeug zur spanabtragenden Bearbeitung von Rohrenden gemäß Oberbegriff der Ansprüche 1 oder 2. Ein solches Werkzeug ist aus Dokument WO 92/20485 A bekannt.

Werkzeuge der hier angesprochenen Art sind bekannt. Sie können beispielsweise dazu dienen, an einem Rohrende eine Planfläche mit einer sich daran anschließenden Innenfase sowie Außenfase anzubringen. Hierfür können drei solcher Werkzeuge vorgesehen sein, die in drei Arbeitsschritten die Planfläche sowie die Fasen bearbeiten beziehungsweise erzeugen. Es wurde auch versucht, diese einzelnen Arbeitsgänge durch ein entsprechend gestaltetes Werkzeug in einem Arbeitsgang zusammenzufassen. Hierzu können an einem Werkzeug verschiedenartige Schneiden vorgesehen sein, die das Rohrende parallel bearbeiten und so in einem Arbeitsgang die Fasen und die Planfläche des Rohrendes bearbeiten und/oder erzeugen. Es hat sich jedoch gezeigt, dass ein solches Werkzeug zwar dazu geeignet ist, das Rohrende in einem Arbeitsgang zu bearbeiten, dafür jedoch sehr komplex aufgebaut und entsprechend teuer herzustellen ist. Außerdem müssen die verwendeten verschiedenartigen Schneiden einzeln bevorratet und hergestellt werden und können auch beim Handling des Werkzeugs leicht verwechselt werden. Weiter müssen diese einzelnen Schneiden zum Erzielen eines guten Ergebnisses räumlich aufwendig relativ zueinander sowie bezüglich der Werkstückkontur eingestellt/justiert werden.

Aufgabe der Erfindung ist es daher, ein Werkzeug der eingangs genannten Art zu schaffen, das diese Nachteile vermeidet.

Zur Lösung dieser Aufgabe wird ein Werkzeug vorgeschlagen, das die in Anspruch 1 oder 2 genannten Merkmale aufweist. Es zeichnet sich dadurch aus, dass es eine Radialeinstell vorrichtung für die mindestens zwei Messerplatten aufweist oder dass pro Messerplatte eine Radialeinstell vorrichtung vorgesehen ist.

Bevorzugt wird ein Ausführungsbeispiel der Erfindung, das sich dadurch auszeichnet, dass zwei Messerplatten vorgesehen sind, die so an dem Werkzeug fixiert sind, dass die erste Schneide der ersten und zweiten Messerplatte der Bearbeitung der Planfläche des Rohrendes dienen, die zweite Schneide der ersten Messerplatte der Erzeugung und/oder Bearbeitung der Innenfase und die dritte Schneide der zweiten Messerplatte der Erzeugung und/oder Bearbeitung der Außenfase. Hierdurch wird bei der Bearbeitung der Planfläche eine Schnittaufteilung auf die zwei Messerplatten und damit eine Mehrschnei-digkeit des Werkzeugs möglich, was zu einer Steigerung der Bearbeitungswerte beiträgt. Die ersten Schneiden der ersten und zweiten Messerplatte können dazu axial auf der gleichen Ebene angeordnet werden, so dass diese gleichermaßen die Planfläche des Rohrendes spanabtragend bearbeiten.

Die Messerplatten können also auf verschiedene Radien eingestellt werden, so dass das Werkzeug für die Bearbeitung von Rohrenden mit unterschiedlichen Durchmessern und/oder Wandstärken anpassbar ist.

Weiter wird ein Ausführungsbeispiel der Erfindung bevorzugt, das sich dadurch auszeichnet, dass eine erste Schneide in einer der mindestens zwei Messerplatten länger ist als die Breite der zu bearbeitenden Planfläche des Rohrendes. In Verbindung mit der Radialeinstellvorrichtung können zwei Messerplatten so positioniert werden, dass in einem Arbeitsgang die Planfläche sowie die zwei Fasen des Rohrendes bearbeitet werden können. Die Planfläche wird dabei von beiden Messerplatten und die Fasen jeweils nur von einer Messerplatte bearbeitet. Hierzu kann eine der Messerplatten mittels der Radialeinstellvorrichtung auf einen größeren Radius eingestellt werden. Mit Radius wird das kürzeste Maß zwischen dem Mittelpunkt der Messerplatte und der Mittelachse des Werkzeugs bezeichnet. Je nach radialer Einstellung der zwei Messerplatten kann im Extremfall - wenn beide Messerplatten auf dem gleichen Radius liegen- eine Planfläche bearbeitet werden, die der Länge der ersten Schneide der Messerplatten entspricht. Im anderen Extremfall können die Radien der Messerplatten so unterschiedlich gewählt werden, dass zwischen der Innen- und der Außenfase keine Planfläche mehr verbleibt. Die Größe der Fasen ist also von der radialen Einstellung der Messerplatten abhängig. Weiter kann so das Werkzeug auch auf Rohre mit verschiedenen Wandstärken eingestellt werden.

Weitere Vorteile ergeben sich aus den übrigen Unteransprüchen.

Bevorzugt wird ein Ausführungsbeispiel, das sich dadurch auszeichnet, dass die Messerplatte als Wendeplatte mit mehreren nutzbaren Schneidbereichen ausgebildet ist, die jeweils eine erste, zweite, dritte Schneide aufweisen. Je nach Ausgestaltung der Wendeplatte kann ein abgenutzter Schneidbereich - durch Drehen und/oder Wenden derselben- gegen einen Schneidbereich mit noch scharfen Schneiden gewechselt werden. Dies erhöht die Gesamtstandzeit der Messerplatte und damit die Wirtschaftlichkeit.

Die Erfindung wird im Folgenden anhand der Zeichnung näher erläutert. Es zeigen:
- Figur 1: eine Seitenansicht eines Werkzeugs mit zwei Messerplatten;
- Figuren 2 und 3: Vorderansichten des in Figur 1 gezeigten Werkzeugs mit beziehungsweise ohne eingesetzten Radialschlitten;
- Figur 4: eine Seitenansicht eines Schneideinsatzes;
- Figur 5: eine separate Draufsicht eines der Radialschlittens;
- Figur 6: einen schematischen Schnitt des Radialschlittens mit dem in Figur 4 gezeigten Schneideinsatz und
- Figuren 7 bis 9: verschiedene Ansichten einer Messer-platte.

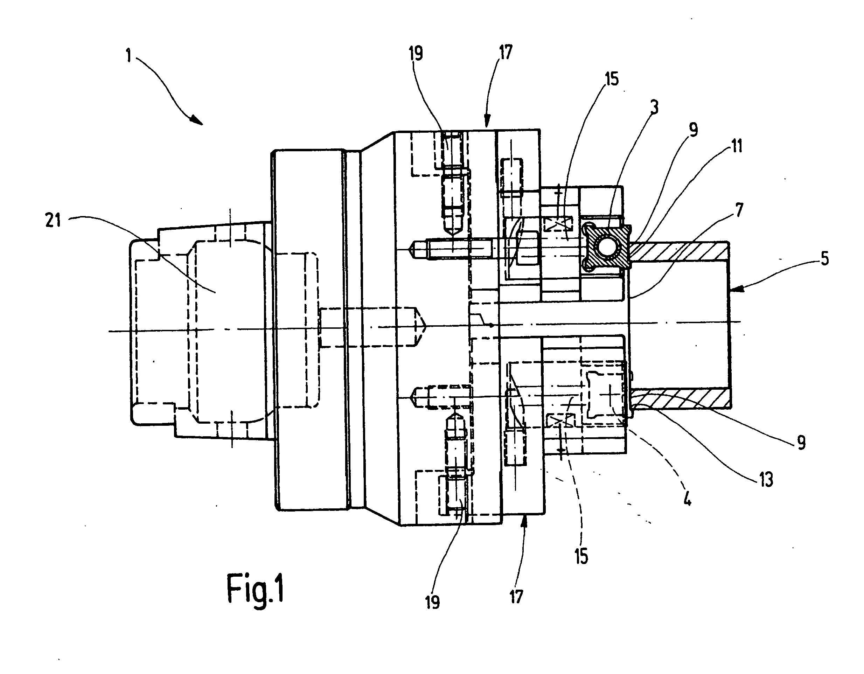

Figur 1 zeigt ein Werkzeug 1 mit insgesamt zwei Messerplatten 3, 4. Diese sind identisch aufgebaut, können also untereinander ausgetauscht werden. Im Schnitt dargestellt ist ein röhrenförmiges Werkstück 5, das ein Rohrende 7 aufweist. Zu erkennen ist, dass die Messerplatten 3, 4 eine Planfläche 9 des Rohrendes 7 bearbeiten und/oder erzeugen. Weiter werden in der hier dargestellten Position und Einstellung des Werkzeugs 1 gegenüber dem Werkstück 5 eine Innenfase 11 sowie eine Außenfase 13 erzeugt und/oder bearbeitet. Es ist zu erkennen, dass die erste Messerplatte 3 gleichzeitig die Innenfase 11 und die Planfläche 9 bearbeitet. Die zweite Messerplatte 4 hingegen bearbeitet gleichzeitig die Planfläche 9 und die Außenfase 13.

Die Länge des röhrenförmigen Werkstücks 5 spielt für die Bearbeitung der Planfläche 9 sowie der Fasen 11, 13 keine Rolle. So können die Enden von langen Rohren gleichermaßen wie ringförmige, beispielsweise an Aggregaten angebrachte, Ansätze bearbeitet werden.

Zur Bearbeitung des Rohrendes 7, also der Planfläche 9 sowie der Fasen 11, 13 werden das Werkzeug 1 und das Werkstück 5 relativ zueinander in Rotation versetzt. Dabei kann entweder das Werkzeug 1 oder das Werkstück 5 stillstehen. Weiter werden das Werkzeug 1 und das Werkstück 5 aufeinander zubewegt, und zwar so weit bis die Planfläche 9 und die Fasen 11, 13 vollständig erzeugt und/oder bearbeitet sind. Hierzu kann das Werkstück stillstehen und das Werkzeug in Vorschubrichtung auf das Werkstück 5 zubewegt werden oder umgekehrt. Unter Vorschubrichtung wird die Bewegung des Werkzeugs 1 entlang seiner Längsachse auf das Werkstück zu verstanden, also hier in Orientierung der Figur 1 gesehen von links nach rechts. Sobald die Planfläche 9 und die Fasen 11, 13 vollständig bearbeitet sind, kann die Vorschubbewegung angehalten werden und das Werkzeug 1 entgegen der Vorschubrichtung wieder von dem Werkstück 5 getrennt werden. Eine weitere Vorschubbewegung des Werkzeugs 1 würde lediglich einen höheren Materialabtrag am Werkstück 5 verursachen, jedoch keine Verbesserung der Planfläche 9 sowie der Fasen 11, 13 bewirken.

Weiter weist das Werkzeug 1 hier pro Messerplatte 3, 4 eine Axialeinstellvorrichtung 15 auf, an der die Messerplatten 3, 4 fixiert sind. Es ist denkbar, nur an einer der Messerplatten 3, 4 eine solche vorzusehen. Die Fixierung der Messerplatten 3, 4 kann auf geeignete Art und Weise, beispielsweise durch Verspannen, Löten, Kleben, einstückig oder auch direkt am Grundkörper des Werkzeugs 1 erfolgen. Über die Axialeinstellvorrichtung 15 können die Messerplatten 3, 4 justiert werden, so dass die Messerplatten 3, 4 axial auf einer Ebene -die senkrecht zur Mittelachse des Werkzeugs 1 steht- liegen und so mit dem Rohrende des Werkstücks 5 in Eingriff gebracht werden können. So kann eine Schnittaufteilung und damit eine Mehrschneidigkeit des Werkzeugs 1 erreicht werden. Mithin trägt dies zur Steigerung der Standzeit der Messerplatten 3, 4 bei.

Weiter weist das Werkzeug 1 hier pro Messerplatte 3, 4 je eine Radialeinstellvorrichtung 17 mit jeweils einer Radialeinstellschraube 19 auf. Es ist denkbar, nur an einer Messerplatte 3, 4 eine solche vorzusehen. Mit Hilfe der Radialeinstellvorrichtungen 17 können die Messerplatten 3, 4 auf unterschiedliche Radien eingestellt werden. Es ist zu erkennen, dass die Messerplatte 4 auf einen kleineren Radius eingestellt ist, als die Messerplatte 3. So ist gewährleistet, dass die Messerplatte 4, die radial weiter innen liegt, die Außenfase 13 und die Messerplatte 3 die Innenfase 11 bearbeiten können.

Die Messerplatten 3, 4 können also über die Radialeinstellvorrichtung 17 auf beliebige Radien eingestellt werden. So ergeben sich vielfältige Einsatzmöglichkeiten des Werkzeugs 1. Abhängig von den unterschiedlichen Rohrdurchmessern und Wandstärken sowie dem Ziel der Bearbeitung des Rohrendes 7 des Werkstücks 5 und den Vorschubweg ergeben sich folgende Einstell-/Bearbeitungsmöglichkeiten:

### Gleicher Radius

In dieser Einstellung ist es möglich, mit beiden Messerplatten wahlweise nur die Planfläche 9 oder eine der Fasen 11, 13 zu bearbeiten.

Weiter können die Messerplatten 3, 4 so eingestellt werden, dass gleichzeitig die Planfläche 9 und eine der Fasen 11, 13 bearbeitet werden.

In einer dritten Betriebsart, bei der die Wandstärke des Werkstücks 5 der wirksamen Schneidenbreite der Messerplatten 3, 4 entspricht, werden gleichzeitig die Planfläche 9 sowie die Fasen 11, 13 bearbeitet.

Bei der ersten und dritten Betriebsart könnte sogar auf eine der Messerplatten 3, 4 verzichtet werden. In diesem Fall muss also nur eine der Messerplatten 3, 4 relativ zum Werkstück 5 ausgerichtet werden.

### Unterschiedliche Radien

Diese Einstellung ist sinnvollerweise dann vorzunehmen, wenn die Wandstärke des Werkstücks 5 kleiner ist als die wirksame Schneidenbreite der Messerplatten 3, 4 und dennoch die Planfläche 9 sowie die Fasen 11, 13 gleichzeitig in einem Arbeitsgang bearbeitet werden sollen. Diese Betriebsart entspricht der in Figur 1 dargestellten Einstellung des Werkzeugs 1. Die Radien der Messerplatten 3, 4 können von Zeit zu Zeit verändert werden, um eine gleichmäßigere Abnutzung der Messerplatten 3,4 zu erreichen. Die Messerplatte mit dem größeren Radius wird also auf den kleineren Radius eingestellt und umgekehrt.

Weiter kann diese Einstellung sinnvoll sein, um eine gleichmäßigere Abnutzung der Messerplatten 3, 4 zu erzielen, wenn nur die Planfläche 9 von Werkstücken 5 mit sehr kleinen Wandstärken bearbeitet werden soll.

Das in Figur 1 dargestellte Werkzeug 1 kann, um in Rotation versetzt zu werden, über einen Hohlschaftkegel 21 mit einer Werkzeugmaschine verbunden werden.

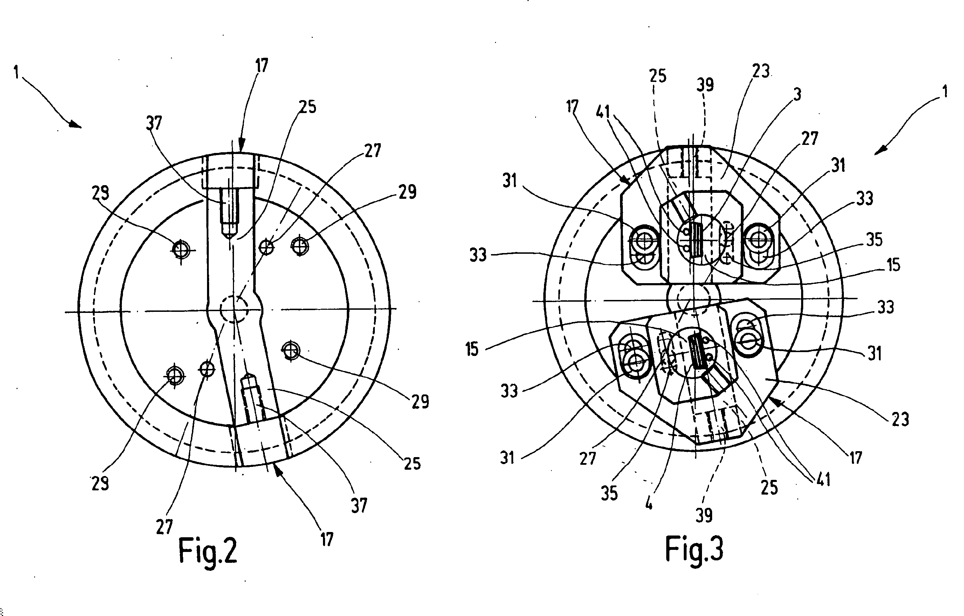

Die Figuren 2 und 3 zeigen eine Vorderansicht des in Figur 1 dargestellten Werkzeugs. Gleiche Teile sind mit gleichen Bezugsziffern versehen, so dass insofern auf die Beschreibung zu Figur 1 verwiesen wird.

Figur 3 zeigt zwei Radialschlitten 23, die Teil der Radialeinstellvorrichtung 17 sind. Die Radialschlitten 13 sind in zwei in Figur 2 sichtbaren Führungsnuten 25 radial verschiebbar gelagert.

In Figur 2 ist zu erkennen, dass das Werkzeug zwei Führungsbolzen 27 sowie vier Gewindebohrungen 29 für in Figur 3 dargestellte Klemmschrauben 31 aufweist.

Die in Figur 3 dargestellten Radialschlitten 23 weisen Langlöcher 33, 35 auf. Diese dienen zur Aufnahme der Klemmschrauben 31 beziehungsweise der Führungsbolzen 27, an denen die Radialschlitten 23 zusätzlich zur Führungsnut 25 geführt werden. Außer zur Führung des Radialschlittens 23 dienen die Klemmschrauben 31 in den Langlöchern 33 zur radialen Fixierung der Radialschlitten 23 der Radialeinstellvorrichtung 17. Die Figuren 2 und 3 lassen erkennen, dass die Radialeinstelleinrichtungen 17 Gewindebohrungen 37 und 39 aufweisen, in die die Radial-Einstellschraube 19 -beispielsweise eine Differentialschraube- eingebracht werden kann. Über diese kann die radiale Justierung der Radialschlitten 23 und damit der Messerplatten 3, 4 erfolgen. Nach erfolgter Einstellung der gewünschten Radien können die Klemmschrauben 31 angezogen und somit die Messerplatten 3, 4 im gewünschten Radius fixiert werden.

In unmittelbarer Nähe des Schneidbereichs der Messerplatten 3, 4 sind Kühlmittelauslässe 41 zu erkennen. Über diese können die Messerplatten 3, 4 sowie die Bearbeitungsstelle mit Kühl- und/oder Schmier- und/oder Spülmittel beaufschlagt werden.

Ferner ist zu erkennen, dass die Führungsnuten 25 einen Winkel abweichend von 180° zueinander einnehmen. Dies bedeutet, dass die Messerplatten 3, 4 nicht diametral gegenüberliegend an dem Werkzeug 1 angeordnet sind, was dazu beitragen kann, die Schwingungsneigung beim Betrieb des Werkzeugs 1 zu reduzieren.

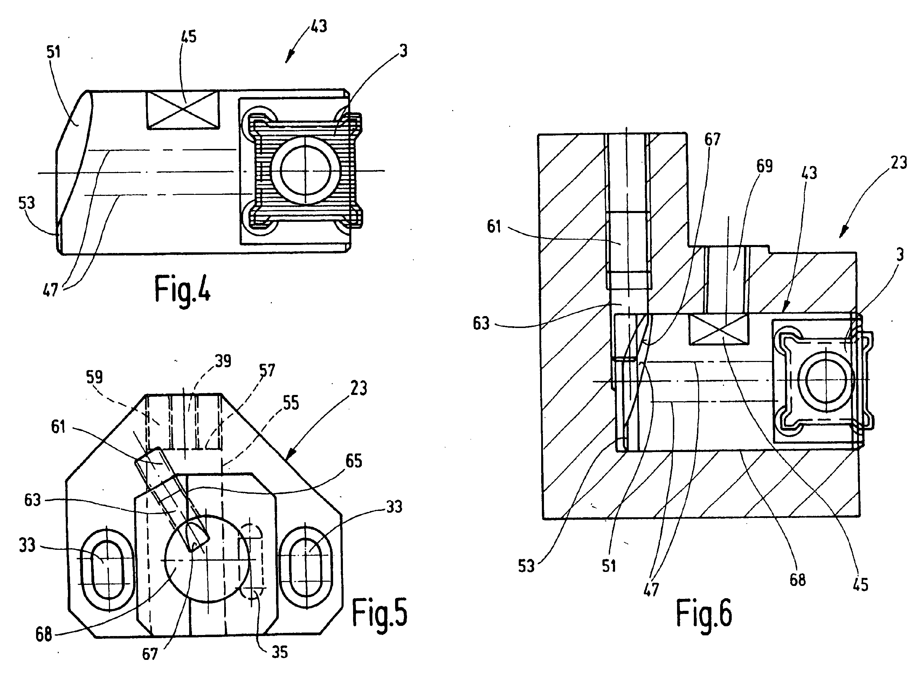

Figur 4 zeigt eine Seitenansicht eines Schneideinsatzes 43, der ein Teil der Axialeinstellvorrichtung 15 ist.

An dem Schneideinsatz 43 ist auf geeignete Art und Weise die Messerplatte 3 fixiert. Es ist denkbar, die Messerplatte 3 und den Schneideinsatz 43 einstückig auszuführen.

Der Schneideinsatz 43, der hier auch als Schneidenhalter dient, weist eine Klemmfläche 45 auf, gegen die eine hier nicht dargestellte Klemmschraube verspannt werden kann. Die Grundform des Schneideinsatzes 43 ist zylindrisch und ist in einer entsprechenden hohlzylindrischen Ausnehmung axial verschiebbar einbringbar.

Denkbar sind aber auch andere geeignete Grundformen, beispielsweise kubische oder dreieckige. Denkbar ist es auch, Führungshilfen vorzusehen, die den Schneideinsatz 43 gegen versentliches Verdrehen in der Ausnehmung des Werkzeugs 1 sichern. Zum Wechsel der Messerplatte 3 kann also der gesamte Schneideinsatz 43 aus dem Werkzeug 1 entnommen werden.

Im fixierten Zustand befindet sich dieser in der zylindrischen Ausnehmung des Radialschlittens 23 und ist mittels der hier nicht dargestellten Klemmschraube, die gegen die Klemmfläche 45 drückt, mit der Zylinderinnenwand des Werkzeugs 1 verspannt. Die Klemmschraube weist ein flächiges Ende auf, das mit der Klemmfläche 45 zusammenwirkt'. So ist ein versehentliches Fixieren des Schneideinsatzes 43 in einer verdrehten Position praktisch ausgeschlossen, wodurch die Messerplatten 3, 4 immer exakt zum Werkstück 5 ausgerichtet sind.

Durch zwei strichpunktierte Linien sind Kühlmittelkanäle 47 angedeutet, die in die hier nicht sichtbaren Kühlmittelauslässe 41 münden.

An der Rückseite des Schneideinsatzes 43 ist eine Stellfläche 51 angebracht, die mit einem hier nicht dargestellten Verstellkeil zusammenwirken kann. Außerdem ist eine Fase 53 angebracht, die entlang einer hier senkrecht zur Bildebene verlaufenden kreisabschnittsförmigen Planfläche des Einsatzes 43 verläuft. Diese Fase 53 erleichtert das Einführen des Schneideinsatzes 43 in die zylindrische Ausnehmung des Radialschlittens 23.

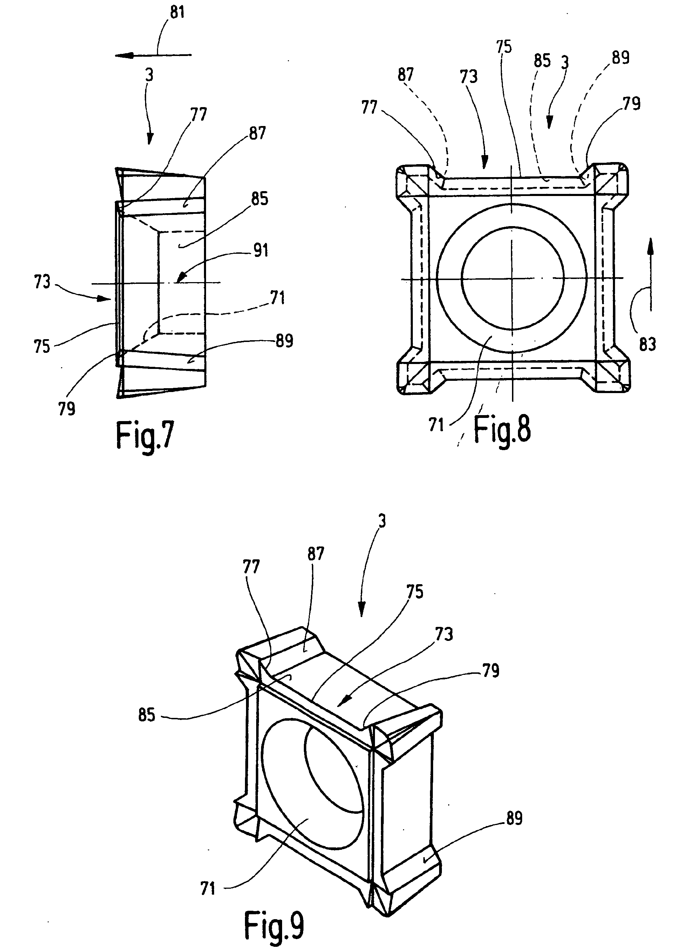

Figur 5 zeigt den in Figur 3 dargestellten Radialschlitten 23. Gleiche Teile sind mit gleichen Bezugsziffern versehen, so dass insofern auf die vorangehenden Figuren verwiesen wird.

Der Radialschlitten 23 ist Teil der Radialeinstellvorrichtung 17. Gestrichelt eingezeichnet ist eine Führungsrippe 55, die in der Führungsnut 25 verschiebbar lagerbar ist. Die Führungsrippe 55 verläuft in der Darstellung gemäß Figur 5 auf der Rückseite des Radialschlittens 23 und weist im Bereich der Gewindebohrung 39 eine hier ebenfalls gestrichelt angedeutete Stufe 57 auf, bildet also einen Absatz 59. Die Gewindebohrung 39 verläuft vollständig in dem Absatz 59. Die Führungsnut 25 weist an ihrem radial nach außen zeigenden Ende eine entsprechende Ausnehmung auf, in die die Gewindebohrung 37 mündet. Im montierten Zustand des Radialschlittens 23, also wenn sich die Führungsrippe 55 und der Absatz 59 in der Führungsnut 25 und der entsprechenden Ausnehmung befinden, kann in die Gewindebohrungen 39 und 37 eine RadialEinstellschraube 19 eingebracht werden, über die die radiale Lage des Radialschlittens 23 justiert werden kann. Nach erfolgter Justierung der radialen Lage des Radialschlittens und damit auch der Messerplatte 3 wird dieser mittels der hier nicht dargestellten Klemmschrauben 31 an den Langlöchern 33 fixiert.

Außerdem dargestellt sind ein Gewindestift 61 und ein Verstellteil 63, in die eine Gewindebohrung 65 eingebracht und die Teil der Axialeinstellvorrichtung 15 sind. Der Verstellteil 63 weist eine Keilfläche 67 auf, die mit der Stellfläche 51 des Schneideinsatzes 43 zusammenwirken kann. Dabei wirken die Flächen 67 und 51 so zusammen, dass wenn der Gewindestift 61 in die Gewindebohrung 65 eingedreht wird sich der Schneideinsatz in der zylindrischen Ausnehmung 68 des Radialschlittens 23 nach vorne in Vorschubrichtung bewegt. So kann auf einfache Art und Weise durch Betätigen des Gewindestifts 61 die Messerplatte 3 in axialer Richtung justiert werden. Sobald die Justierung abgeschlossen ist, kann der Schneideinsatz 43 mittels der Klemmschraube und der Klemmfläche 45 im Werkzeug 1 sicher fixiert werden.

Figur 6 zeigt eine schematisierte Schnittdarstellung des Radialschlittens 23. Zur Vereinfachung der Darstellung sind verschiedene Elemente in die Bildebene gedreht. Gleiche Teile sind mit gleichen Bezugsziffern versehen, so dass insofern auf die Beschreibung der vorangehenden Figuren verwiesen wird.

Zu erkennen ist die zylindrische Ausnehmung 68, in die der im Wesentlichen zylindrische Schneideinsatz 43 eingebracht ist. Sichtbar ist eine Gewindebohrung 69, in die die bereits beschriebene, nicht dargestellte, entgegen die Klemmfläche 45 drückende Klemmschraube einbringbar ist. Die Gewindebohrung 69 ist leicht gegen die zur Mittelachse des Schneideinsatzes 43 senkrecht stehende Ebene radial nach außen in Vorschubrichtung geneigt. Dies bewirkt, dass sich die Klemmkräfte der Klemmschraube in eine in der Ebene liegende Komponente und in eine entgegen der Vorschubrichtung wirkende aufteilen. Die entgegen der Vorschubrichtung wirkende Kraftkomponente drückt also den Schneideinsatz 43 entgegen der Vorschubrichtung in die zylindrische Ausnehmung 68 des Radialschlittens 23 hinein. Dies wird letztlich dazu ausgenützt, dass die Keilfläche 67 des Verstellteils 63 und die Stellfläche 51 gegeneinandergepresst werden. Mithin ist also gewährleistet, dass eine bereits über den Gewindestift 61 erfolgte axiale Justierung nicht durch die Klemmkräfte verändert wird.

Die Figuren 7 bis 9 zeigen verschiedene Detailansichten einer der Messerplatten 3, 4. Figur 7 zeigt eine Seitenansicht, Figur 8 zeigt eine Draufsicht und Figur 9 zeigt eine perspektivische Darstellung einer der Messerplatten 3, 4. Bei Details, die in den Figuren 7 bis 9 gleichermaßen dargestellt sind, wird auf diese gleichzeitig Bezug genommen. Vereinfachend wird nun auf die Messerplatte 3 Bezug genommen, so dass das Gesagte auch für die Messerplatte 4 gilt.

Die in den Figuren 7 bis 9 dargestellte Messerplatte 3 ist in einem Winkel von 90° drehsymmetrisch. Die Beschreibung erfolgt nur für einen Ausschnitt von 90° der Messerplatte 3, die gleichermaßen für die weiteren drei drehsymmetrischen Ausschnitte gilt.

Die Messerplatte 3 ist als Wende- beziehungsweise Wechselplatte ausgeführt und weist eine zentrische Senkung 71 auf, in die eine Befestigungsschraube einbringbar ist. Die Messerplatte 3 weist insgesamt vier Schneidbereiche 73 auf. Wenn einer dieser Schneidbereiche 73 abgenutzt ist, kann ein weiterer, noch scharfer Schneidbereich 73 durch eine einfache Drehung der Messerplatte 3 um 90° um die zentrische Senkung 71 so positioniert werden, dass dieser das Werkstück 5 bearbeitet. Jeder der Schneidbereiche 73 weist insgesamt drei Schneiden 75, 77, 79 auf. Die Schneiden 75, 77 sowie die Schneiden 75, 79 grenzen unmittelbar aneinander an und nehmen einen Winkel zueinander ein.

In Figur 7 ist ein Pfeil 81 dargestellt, der die Bearbeitungsrichtung angibt. Unter Bearbeitungsrichtung versteht sich die Richtung, entlang der die Messerplatte 3 relativ zur Bearbeitungsfläche des Werkstücks 5 geführt wird.

In Figur 8 ist durch einen Pfeil 83 beispielhaft eine von vier möglichen Vorschubrichtungen der Messerplatte 3 angegeben.

In Figur 8 ist zu erkennen, dass die erste Schneide 75, die zur Bearbeitung der Planfläche 9 des Rohrendes 7 dient, senkrecht zur Bearbeitungs- und Vorschubrichtung steht. Die Schneiden 77, 79 stehen in einem Winkel zur Schneide 75, der den Winkel der Fasen 11, 13 festlegt. Hierzu stehen die Schneiden in einem Winkel zu einer gedachten, senkrecht zur Vorschubrichtung stehenden Ebene, der dem Winkel der Fasen 11, 13 entspricht.

Aus Figur 7 ist zu entnehmen, dass die Schneiden 77, 79 zusätzlich um einen Winkel zu einer gedachten, senkrecht zur Bearbeitungsrichtung stehenden Ebene - die der Bildebene der Figur 8 entspricht - verkippt werden können, so dass diese einen Schälschnitt an den Fasen 11, 13 ausführen.

Zu erkennen ist, dass die Messerplatte 3 sich entgegen der Bearbeitungsrichtung verjüngt. Jede der Schneiden 75, 77, 79 ist also hinterschliffen. Dies zeigt sich an den Flächen 85, 87, 89, die jeweils an eine der Schneiden 75, 77, 79 angrenzen und die entgegen der Bearbeitungsrichtung leicht zur Mittelachse -die in Figur 7 durch eine strichpunktierte Linie 91 angedeutet ist- der Messerplatte 3 hin geneigt sind.

Die Schneiden 75, 77, 79 können in Verbindung mit den Axial-/Radialeinstellvorrichtungen 15, 17 des Werkzeugs 1 auf verschiedenste Weise eingesetzt werden. So ist denkbar, bei einem Werkstück, dessen Wandstärke kleiner ist als die Länge der ersten Schneide 75, nur eine Planfläche 9 zu erzeugen und/oder zu bearbeiten. Wird bei einem solchen Werkstück 5 die Messerplatte 3 entsprechend radial verstellt, so kommt auch eine der Schneiden 77, 79 mit diesem in Eingriff, so dass entweder eine Innenfase 11 oder eine Außenfase 13 bearbeitet oder erzeugt wird.

Wenn zwei oder mehrere Messerplatten 3, 4 verwendet werden, kann also beispielsweise die Messerplatte 3 zur Bearbeitung der Planfläche 9 sowie der Innenfase 11 und die Messerplatte 4 zur Bearbeitung der Planfläche 9 sowie der Außenfase 13 eingesetzt werden. Eine weitere Einsatzmöglichkeit ergibt sich, wenn die Messerplatte 3 so justiert wird, dass eine der Schneiden 77, 79 mit einer der Fasen 11, 13 des Rohrendes 7 in Eingriff kommt und gleichzeitig der Vorschub des Werkzeugs 1 so begrenzt wird, dass die erste Schneide 75 nicht mit der Planfläche 9 des Rohrendes 7 in Eingriff kommt. Für diesen Fall ist es möglich, nur eine der Fasen 11, 13 zu erzeugen und/oder zu bearbeiten.

Ferner ist es möglich, die Wandstärke des Werkstücks 5 größer zu wählen, als die Breite der ersten Schneide 75, jedoch nicht weiter als die wirksame Breite des Schneidbereichs 73. In diesem Fall können mit nur einer Messerplatte 3 in einem Arbeitsgang sowohl die Planfläche 9 als auch die Fasen 11, 13 an dem Rohrende 7 des Werkstücks 5 erzeugt und/oder bearbeitet werden. Bei einer Begrenzung des Vorschubs ist es auch möglich, nur die Fasen 11, 13 zu erzeugen und/oder zu bearbeiten.

Ferner ist es denkbar, die Winkel, die die Schneiden 77, 79 zur Schneide 75 einnehmen, unterschiedlich auszulegen. Dies hat zur Folge, dass an dem Rohrende 7 Fasen mit unterschiedlichen Fasenwinkeln realisierbar sind.

Möglich ist es auch, dass die Messerplatten 3, 4 direkt, insbesondere mit dem Grundkörper des Werkzeugs 1, mit dem Werkzeug 1 verspannt, bevorzugt mit einer Spannpratze, oder verschraubt oder gelötet oder auf andere geeignete Art und Weise verbunden sind. Insbesondere bei kleinen Rohrdurchmessern, vorzugsweise kleiner 6 mm, können die Schneiden 75, 77, 79 einstückig mit dem Werkzeug 1 ausgeführt sein. Dabei ist vorteilhaft, dass die Messerplatten 3, 4 und damit auch deren Fixierung entfallen können.

Schließlich ist es denkbar, die Messerplatte 3 in einer beliebigen polygonen Form auszuführen. Es können also an der Messerplatte 3 eine beliebige Anzahl von Schneidbereichen 73 vorgesehen sein. Ein Wechsel des aktiven Schneidbereichs 73 erfolgt dann durch Drehung der Messerplatte 3 um den entsprechenden Polygonwinkel.

## Patentansprüche

1. Werkzeug zur spanabtragenden Bearbeitung von Rohrenden, mit mindestens einer Schneide, wobei wenigstens zwei mindestens eine Schneide aufweisende Messerplatten (3,4) vorgesehen sind, die auf geeignete Weise am Werkzeug (1) fixiert sind, wobei die mindestens zwei Messerplatten (3,4) eine erste Schneide (75) zur Bearbeitung und/oder Erzeugung einer Planfläche (9) des Rohrendes (7), eine zweite Schneide zur Erzeugung und/oder Bearbeitung einer sich an die Planfläche anschließenden Innenfase (11) und einer dritten Schneide zur Erzeugung und/oder Bearbeitung einer weiteren sich an die Planfläche anschließenden Außenfase (13) aufweisen, **gekennzeichnet durch** eine Radialeinstellvorrichtung (17) für die mindestens zwei Messerplatten (3,4).

2. Werkzeug zur spanabtragenden Bearbeitung von Rohrenden, mit mindestens einer Schneide, wobei wenigstens zwei mindestens eine Schneide aufweisende Messerplatten (3,4) vorgesehen sind, die auf geeignete Weise am Werkzeug (1) fixiert sind, wobei die mindestens zwei Messerplatten (3,4) eine erste Schneide (75) zur Bearbeitung und/oder Erzeugung einer Planfläche (9) des Rohrendes (7), eine zweite Schneide zur Erzeugung und/oder Bearbeitung einer sich an die Planfläche anschließenden Innenfase (11) und einer dritten Schneide zur Erzeugung und/oder Bearbeitung einer weiteren sich an die Planfläche anschließenden Außenfase (13) aufweisen, **dadurch gekennzeichnet, dass** pro Messerplatte (3,4) eine Radialeinstellvorrichtung (17) vorgesehen ist.

3. Werkzeug nach Anspruch 1 oder 2, **dadurch gekennzeichnet, dass** die Messerplatten (3,4) so angeordnet sind, dass die Planfläche (9) und die daran angrenzenden Fasen (11,13) von den mindestens zwei Messerplatten (3,4) in einem Arbeitsgang erzeugt beziehungsweise bearbeitet werden.

4. Werkzeug nach einem der vorhergehenden Ansprüche, **dadurch gekennzeichnet, dass** die mindestens zwei Messerplatten (3,4) nicht diametral gegenüberanliegend angeordnet sind.

5. Werkzeug nach einem der vorhergehenden Ansprüche, **gekennzeichnet durch** eine Axialeinstellvorrichtung (15) für die mindestens eine Messerplatte (3,4).

6. Werkzeug nach einem der vorhergehenden Ansprüche, **dadurch gekennzeichnet, dass** die mindestens zwei Messerplatten (3,4) zur Bearbeitung und/oder Erzeugung der Planfläche (9), sowie der Fasen (11,13) in einem Arbeitsgang identisch aufgebaut sind.

7. Werkzeug nach einem der vorhergehenden Ansprüche, **dadurch gekennzeichnet, dass** die Radialeinstellvorrichtung (17) einen Radialschlitten (23) aufweist.

8. Werkzeug nach einem der vorhergehenden Ansprüche, **dadurch gekennzeichnet, dass** pro Messerplatte (3,4) eine Axialeinstellvorrichtung (15) vorgesehen ist.

9. Werkzeug nach einem der vorhergehenden Ansprüche, **dadurch gekennzeichnet, dass** die Axialeinstellvorrichtung (15) eine Axialeinstellschraube, einen Verstellteil (63) und eine Klemmfläche (45) aufweist.

10. Werkzeug nach einem der vorhergehenden Ansprüche, **dadurch gekennzeichnet, dass** das Werkzeug (1) einen Schneideinsatz (43) für die mindestens eine Messerplatte (3,4) aufweist.

11. Werkzeug nach einem der vorhergehenden Ansprüche, **dadurch gekennzeichnet, dass** die mindestens eine Messerplatte (3,4) direkt mit dem Werkzeug (1) verbunden, vorzugsweise verspannt, insbesondere mit einer Spannpratze, oder verschraubt oder verlötet ist, oder dass das Werkzeug (1) die mindestens eine Schneide (75,77,79) aufweist.

## Claims

1. Tool for the material removing machining of pipe ends having at least one cutting edge, with at least two blade plates (3, 4) comprising at least one cutting edge being provided which are fixed on the tool (1) in a suitable manner, with the at least two blade plates (3, 4) comprising a first cutting edge (75) for machining and/or producing an end surface (9) of the pipe end (7), a second cutting edge for producing and/or machining an internal chamfer (11) adjoining the end surface, and a third cutting edge for producing and/or machining a further external chamfer (13) adjoining the end surface, **characterized by** a radial setting device (17) for the at least two blade plates (3, 4).

2. Tool for the material removing machining of pipe ends having at least one cutting edge, with at least two blade plates (3, 4) comprising at least one cutting edge being provided which are fixed on the tool (1) in a suitable manner, with the at least two blade plates (3, 4) comprising a first cutting edge (75) for machining and/or producing an end surface (9) of the pipe end (7), a second cutting edge for producing and/or machining an internal chamfer (11) adjoining the end surface, and a third cutting edge for producing and/or machining a further external chamfer (13) adjoining the end surface, **characterized in that** one radial setting device (17) is provided for one blade plate (3, 4) each.

3. Tool according to claim 1 or 2, **characterized in that** the blade plates (3, 4) are positioned in such a manner that the end surface (9) and the adjoining chamfers (11, 13) are produced and machined, respectively, by the at least two blade plates (3, 4) in one working operation.

4. Tool according to any one of the preceding claims, **characterized in that** the at least two blade plates (3, 4) are not positioned diametrically opposite.

5. Tool according to any one of the preceding claims, **characterized by** an axial setting device (15) for the at least one blade plate (3, 4).

6. Tool according to any one of the preceding claims, **characterized in that** the at least two blade plates (3, 4) are of identical construction for machining and/or producing the end surface (9) and the chamfers (11, 13) in one working operation.

7. Tool according to any one of the preceding claims, **characterized in that** the radial setting device (17) comprises a radial slide (23).

8. Tool according to any one of the preceding claims, **characterized in that** one axial setting device (15) is provided for one blade plate (3, 4) each.

9. Tool according to any one of the preceding claims, **characterized in that** the axial setting device (15) comprises an axial setting screw, an adjusting part (63) and a clamping surface (45).

10. Tool according to any one of the preceding claims, **characterized in that** the tool (1) comprises a cutting insert (43) for the at least one blade plate (3, 4).

11. Tool according to any one of the preceding claims, **characterized in that** the at least one blade plate (3, 4) is directly connected with the tool (1), preferably clamped, particularly by means of a clamping lug, or screwed or soldered, or that the tool (1) comprises the at least one cutting edge (75, 77, 79).

## Revendications

1. Outil d'usinage par enlèvement de copeaux de bouts de tube muni d'au moins une arête coupante, dans lequel sont prévus au moins deux plaques de lame (3, 4) comportant au moins une arête coupante qui sont fixées de manière appropriée à l'outil (1), avec les deux plaques de lame (3, 4) comportant une première arête coupante (75) pour l'usinage et/ou la production d'une surface plane (9) du bout de tube (7), une deuxième arête coupante pour la production et/ou l'usinage d'un chanfrein intérieur (11) attenant à la surface plane, et une troisième arête coupante pour la production et/ou l'usinage d'un autre chanfrein extérieur (13) attenant à la surface plane, **caractérisé par** un dispositif d'ajustage radial (17) pour les au moins deux plaques de lame (3, 4).

2. Outil d'usinage par enlèvement de copeaux de bouts de tube muni d'au moins une arête coupante, dans lequel sont prévus au moins deux plaques de lame (3, 4) comportant au moins une arête coupante qui sont fixées de manière appropriée à l'outil (1), avec les deux plaques de lame (3, 4) comportant une première arête coupante (75) pour l'usinage et/ou la production d'une surface plane (9) du bout de tube (7), une deuxième arête coupante pour la production et/ou l'usinage d'un chanfrein intérieur (11) attenant à la surface plane, et une troisième arête coupante pour la production et/ou l'usinage d'un autre chanfrein extérieur (13) attenant à la surface plane, **caractérisé en ce qu'**un dispositif d'ajustage radial (17) est prévu pour chacune des plaques de lame (3, 4).

3. Outil selon la revendication 1 ou 2, **caractérisé en ce que** les plaques de lame (3, 4) sont positionnées de manière a ce que la surface plane (9) et les chanfreins attenants (11, 13) sont respectivement produits et usinés par les au moins deux plaques de lame (3, 4) en une seule étape.

4. Outil selon l'une des revendications précédentes, **caractérisé en ce que** les au moins deux plaques de lame (3, 4) ne sont pas positionnées diamétricalement opposées.

5. Outil selon l'une des revendications précédentes, **caractérisé par** un dispositif d'ajustage axial (15) pour ladite au moins une plaque de lame (3, 4).

6. Outil selon l'une des revendications précédentes, **caractérisé en ce que** les au moins deux plaques de lame (3, 4) présentent une configuration identique pour l'usinage et/ou la production de la surface plane (9) et les chanfreins (11, 13) en une seule étape.

7. Outil selon l'une des revendications précédentes, **caractérisé en ce que** le dispositif d'ajustage radial (17) comporte un chariot radial (23).

8. Outil selon l'une des revendications précédentes, **caractérisé en ce qu'**un dispositif d'ajustage axial (15) est prévu pour chacune des plaques de lame (3, 4).

9. Outil selon l'une des revendications précédentes, **caractérisé en ce que** le dispositif d'ajustage axial (15) comporte une vis d'ajustage axial, une pièce d'ajustage (63) et une face de serrage (45).

10. Outil selon l'une des revendications précédentes, **caractérisé en ce que** l'outil (1) comporte un insert de coupe (43) pour ladite au moins une plaque de lame (3, 4).

11. Outil selon l'une des revendications précédentes, **caractérisé en ce que** ladite au moins une plaque de lame (3, 4) est relié directement à l'outil (1), de préférence par serrage, particulièrement à l'aide d'une griffe de serrage, ou par vissage ou brasage, ou que l'outil (1) comporte ladite au moins une arête coupante (75, 77, 79).
